# EUROPEAN PATENT SPECIFICATION

(11) **EP 3 052 840 B1**
(45) Date of publication and mention of the grant of the patent: **20.11.2019**
(21) Application number: 14781936.1
(22) Date of filing: 02.10.2014
(51) Int. Cl.: F16K 1/12, F16K 27/02

(54) **VALVE**
VENTIL
VANNE

(30) Priority: 03.10.2013 GB 201317542
(43) Date of publication of application: 10.08.2016
(60) Divisional application: 19200896.9
(73) Proprietor: Goodwin PLC, Staffordshire ST1 3NR (GB)
(72) Inventor: GOODWIN, Matthew Stanley, Aston Stafford ST18 9LJ (GB); O'NIEN, Stephen James, Stocke-on-Trent ST9 0HU (GB); PRESTON, Timothy James, Trentham Stoke-on-Trent ST4 8DS (GB); GOODWIN, Richard Stanley, Staffordshire ST21 6PG (GB)
(74) Representative: J A Kemp LLP
(86) International application number: PCT/GB2014/052982
(87) International publication number: WO 2015/049525

(56) References cited:
- WO-A1-01/34982
- FR-A- 1 588 442
- GB-A- 316 386
- US-A- 3 680 606
- US-A1- 2003 196 698
- US-A1- 2012 012 766

## Description

The present invention relates to a valve, in particular an actuatable valve. The valve may to actuated to be open or closed to fluid flow through the valve. Preferably the valve is an actuatable control valve which allows variations between full flow and no flow in the pressure drop across the valve (i.e. variations in flow rate through the valve), for instance a substantially continuous variation in flow resistance between full flow resistance and minimum flow resistance.

Actuatable control valves which can be operated under all pressure conditions and all differential pressures with low operating forces are known, for example in CA 872, 106. Such valves comprise an outer housing which defines an inlet opening and an outlet opening as well as an inner housing which houses a restrictor for restricting fluid flow along a fluid flow path through the valve. The restrictor is actuatable by an actuation rod from outside of the valve or by other means, for example by an electric actuator (see for example US 2013/0068976). In all cases the outer and inner housings are integral, being made by a single casting. Once the casting has been made, the actuatable restrictor can be inserted through the inlet and/or outlet opening and fixed inside the inner housing. The actuator typically comprises a piston which is engagable with a surface defining the fluid flow path thereby to block the fluid flow path. Because the piston must be inserted through one of the inlet opening and outlet opening it is often necessary to provide a bush for reducing the inner diameter of the outlet opening formed in the outer housing so that the piston can be inserted into the outer housing through the outlet opening. A bush is often screw fitted into the outlet housing. Such an arrangement is described in US 2006/0202428 in which the bush is connected to a throttle cage which allows the valve to vary the restriction to fluid flow along the fluid flow path in a substantially continuous manner.

GB 316,386 and US 2003/196698 disclose an actuatable valve in accordance with the pre-characterizing section of claim 1.

Designs of non-pressure balanced valves are disclosed in FR 1,588,442, US 3,680,606, US 2012/012766 and WO 01/34982.

The present invention provides an actuatable valve, comprising: an outer housing; an upstream element of the outer housing defining an inlet opening; a downstream element of the outer housing defining an outlet opening; and an inner housing element inside the outer housing for housing an actuatable restrictor for restricting fluid flow along a fluid flow path through the valve; wherein the inner housing element is non-integral with at least one of the upstream and downstream elements and characterised in that leading and trailing surfaces of moving components of the actuatable restrictor which are of equal area are in fluid communication with fluid on the same side of the actuatable valve in all positions such that pressures on either side of the moving components are equal such that the actuatable valve is a pressure balanced valve.

Therefore, in the present invention the inner housing element is not integral with the outer housing. The separate nature of the inner housing element from the outer housing means that during assembly of the valve the inner housing must be mounted to the upstream and downstream elements of the outer housing. However, this arrangement, despite requiring extra assembly steps to achieve an inner housing in an outer housing, has several advantages, due to the discrete nature of the inner housing element. The first advantage is that the integrity of the inner housing can be more easily determined and manufacturing steps such as surface grinding, polishing, applying coatings etc. can be more easily performed on the inner housing. This is because access to the inner housing is not through the inlet or outlet opening of the outer housing. Inspection of the integrity of the outer housing to determine the integrity/presence or otherwise of defects is also more easily performed, such as dye penetration techniques, radiography (for which there must be space around the object being inspected) and magnetic particle inspection (if a magnetic material is being used). All of those non destructive inspection techniques require adequate access of the surface being inspected. If the inner housing is outside of the outer housing this is much more readily achievable. An additional advantage is that the restrictor can be assembled in the inner housing prior to the inner housing being inserted into the outer housing, which is much more convenient. In some embodiments it is no longer necessary to provide a bush to reduce the diameter of the inlet or outlet opening as is necessary for example in the valve of US 2006/0202428. This is advantageous as the use of a bush can make a sealing surface (where the valve seals against pipework) uneven, making the valve face where it should seal with a gasket or metallic seal against mating pipework a potential leak path to atmosphere.

A further advantage of the present invention is that the outer housing and inner housing can be made by processes other than casting. For example, at least some elements of the inner or outer housing may be made by forging, for example closed die forging. Additionally the valve design of the present invention has the benefit of allowing a degree of modularity in that different combinations outer housing and inner housing elements can be selected dependent upon the required valve performance such as operating pressure, maximum flow rate etc.

Although it is possible to cast the inner and outer housings in one integral casting as has been done previously, this can be difficult as effectively the operator is trying to make a casting within a casting. Typically this results in a poor feed path for molten metal to the inner housing element, making it prone to having volumetric defects. The design of the cast therefore is more complicated. Due to the single piece design it is impossible to get access properly to inspect the surfaces on valves with a small bore (i.e. 50mm or smaller) with larger sized bores (i.e. 300mm and greater) being extremely difficult and time consuming to inspect and repair due to very restricted access to the area between the outer wall of the inner housing and the inner wall of the outer housing. If during testing any defects are found in the inner housing (or the inner surface of the outer housing), these defects can be harder to repair as all repairs must be performed through the inlet opening or outlet opening of the outer housing (e.g. by welding).

By re-designing the valve with separate, discrete inner and outer housings, the valve can be made of a modular construction. Even by having more constituent parts, significant manufacturing cost reduction can be achieved. This is because by manufacturing the constituent parts as individual components the components can be produced by forging or casting methods, and by not trying to make a casting within a casting, fewer machining steps and lower subsequent difficulty in repairing and inspecting the item can be expected. This results in much lower cost per unit due to higher integrity of the casting by practically eliminating the cause from which the need to repair arises in the first instance. Additionally because of this higher quality, parts can be produced in a much shorter timescale due to this manufacturing methodology. A typical casting manufacturing lead time for the existing design with a pattern already in existence would be typically 24 - 40 weeks duration. In contrast, by eliminating the manufacturability issues with the existing design, castings or forgings could be procured in 8 - 12 weeks, giving a significant competitive advantage in manufacturing lead time with the inventive steps taken.

In an embodiment the inner housing element is non-integral with the upstream and downstream elements. This provides the advantage that the upstream and downstream elements of the outer housing are both separate from the inner housing element so that the inner housing element can be prepared entirely separately from the upstream and downstream elements. When the three elements are ready to be assembled, the inner housing element and attached restrictor do not need to pass through the inlet opening or outlet opening defined in the upstream and downstream elements. Therefore, the inlet and outlet openings defined by the upstream and downstream elements can be sized and machined exactly for use during manufacture so that the surface defining the inlet and outlet openings can be integral with the other parts of the upstream and downstream elements (for example flanges for connecting the valve to pipework). In this way it is not necessary for a bush to be present in the inlet or outlet opening and a flat (even) sealing surface can easily be formed on the upstream and/or downstream elements.

In an embodiment the valve further comprises a central element of the outer housing between the upstream and downstream elements. In an embodiment the inner housing element is mounted to the central element of the outer housing. This allows easier assembly as attaching the inner housing element to only the central element whilst the upstream elements and/or downstream elements are not present is simpler (because it is not necessary to work through the inlet opening or outlet opening). In an embodiment the inner housing element is integral to the central element of the outer housing. For example, the inner housing element and central element of the outer housing may be cast or forged as one integral element (discrete from the upstream and downstream elements of the outer housing). This reduces the number of assembly steps as it is not necessary to use, for example, screw fixing means for mounting the inner housing element to the outer housing. One way of assembling the outer housing is to provide at least two of the upstream, downstream and central elements of the outer housing with flanges which are through bolted thereby to join the elements together and form the outer housing.

In an embodiment the central element of the outer housing is integral with at least one of the upstream and downstream elements of the outer housing. This may be advantageous in that the valve has fewer parts. It may be that only the upstream or downstream side of the inner housing requires really good access and access to the other of the upstream and downstream side of the inner housing through one of the inlet opening and outlet opening may be acceptable in order to perform any necessary machining, assembly, defect inspection and repair.

In an embodiment the inner housing is non-integral with the elements of the outer housing. This advantageously allows all around access to the inner housing for machining, polishing, defect analysis, repair and assembly.

In an embodiment at least one web extends between the inner housing element and outer housing and the inner housing element is fixed to the outer housing via the at least one web. The web may be integral to one or both of the inner housing element and outer housing and supports the inner housing element within the outer housing.

In an embodiment the fluid flow path of the valve is substantially in an axial direction between the inlet and outlet openings and substantially annular around the inner housing. In an embodiment the actuatable restrictor comprises a piston engagable with a portion of an inner surface of the outer housing defining the fluid flow path thereby to block the fluid flow path. In this way the actuatable restrictor can be actuated to open or close the valve. Preferably the portion of the inner surface of the outer housing is defined by material integral to a flange of the upstream element for connecting the valve to pipework. This avoids the need for a bush and difficulties which that might entail in particular in terms of accurate dimensioning of the inner surface of the outer housing and any mating surface of the outer housing which mates with pipework to which the valve is connected.

In an embodiment the valve further comprises a throttle cage in the form of a tube with a plurality of axially spaced through holes through walls of the tube, the piston being translatable axially in the tube thereby to vary the number of the plurality of through holes through which fluid can flow and thereby to vary the restriction to fluid flow along the fluid flow path. This allows the valve to be a flow control valve in the sense that the restriction to the flow of fluid of the valve can be varied between being on and off, for example substantially continuously and preferably in a substantially linear manner.

In an embodiment the actuatable restrictor comprises a piston rod at least partly housed in a piston housing (the piston housing may be part of/integral to the inner housing). Preferably the piston housing comprises a seal in a groove for sealing against the piston rod. Such an arrangement is advantageous over the situation where the seal is fitted to the piston rod and results in better sealing performance (integrity and life) at the expense of requiring the piston rod to be a little longer as in the fully actuated condition a surface against which the seal in the piston rod can bear is needed. This is particularly the case where surfaces of the piston rod are specifically prepared (e.g. have a surface hardening treatment such as laser hard facing applied, followed by grinding) to act as a bearing surface where the seals in the grooves of the piston housing contact the piston rod.

In an embodiment the piston housing is integral with the inner housing. This is advantageous in that it reduces the number of components of the valve. It is particularly suitable for the case in which the inner housing is non integral with elements of the outer housing.

The valve of the present invention may be an axial valve. The present invention provides a method of manufacturing an actuatable pressure balanced valve, comprising the steps of: providing an outer housing comprising at least an upstream element defining an inlet opening and a downstream element defining an outlet opening; providing an inner housing element which is separate from the upstream element and/or downstream element; installing an actuatable restrictor for restricting fluid flow along a fluid flow path through the valve into the inner housing, wherein leading and trailing surfaces of moving components of the actuatable restrictor (300) which are of equal area are in fluid communication with fluid on the same side of the actuatable valve in all positions such that pressures on either side of the moving components are equal; and installing the inner housing element with the installed actuatable restrictor into the outer housing.

Therefore, the inner housing is made in a separate step to the step of making the upstream and downstream elements of the outer housing. As a consequence of this machining, polishing, defect detection, repair of the inner housing and assembly of the actuatable restrictor into or onto the inner housing are made easier due to the separate nature of the upstream and downstream elements and the inner housing particularly in terms of access to the various surfaces of the inner housing.

The present invention further provides a kit of parts for assembling into an actuatable valve, comprising:
an outer housing;
an upstream element of the outer housing defining an inlet opening;
a downstream element of the outer housing defining an outlet opening; and an inner housing element for housing an actuatable restrictor for restricting fluid flow along a fluid flow path through the valve inside the outer housing;
wherein the inner housing element is non-integral with at least one of the upstream and downstream elements, characterized in that the actuatable valve is a pressure balanced valve.

The present invention will now be described by way of example only with reference to the following drawings:
Figure 1 is an expanded perspective view of a valve according to a first embodiment;
Figure 2 is a cut-away perspective view of the assembled valve of Figure 1;
Figure 3 is a cross-sectional view of the valve of Figure 1;
Figure 4 is a perspective view of a throttle cage;
Figure 5 is an expanded perspective view of a valve according to a second embodiment;
Figure 6 is a cut-away perspective view of the assembled valve of Figure 5;
Figure 7 is a cross-sectional view taken across the axial direction of the valve of Figure 5;
Figure 8 is a cross-sectional view in the vertical plane in the axial direction of the valve of Figure 5; and
Figure 9 is a cross-sectional view in the horizontal plane in the axial direction of the valve of Figure 5.

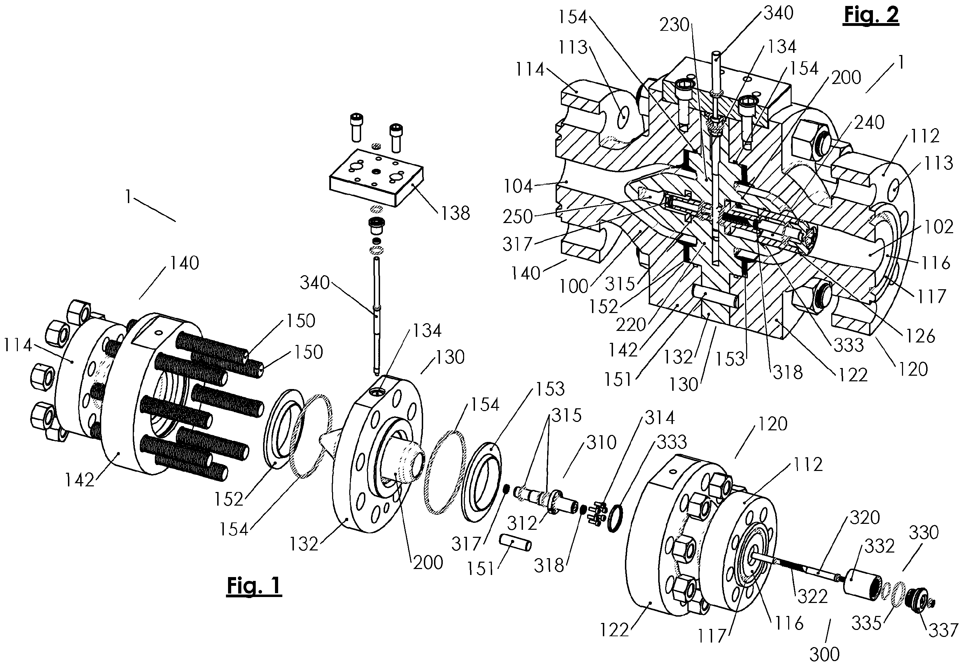

A first embodiment of the present invention will now be described with reference to Figures 1-3.

The valve 1 of the present invention operates in substantially the same way as the valves disclosed in CA 872, 106, US 2006/0202428 and US 2013/0068976. Those documents are all incorporated herein by reference in their entirety. Those valves and the valve 1 of the present invention are designed such that both the leading and trailing surfaces (surfaces not parallel to the axial direction) of moving components of an actuatable restrictor 300 for restricting fluid flow along a fluid flow path through the valve 1 are in fluid communication with liquid on the upstream side. Thus, the pressures on either side of the moving components are equal and low actuation forces are needed to actuate the restrictor. The valves may be for use in the oil or chemical industries, for example.

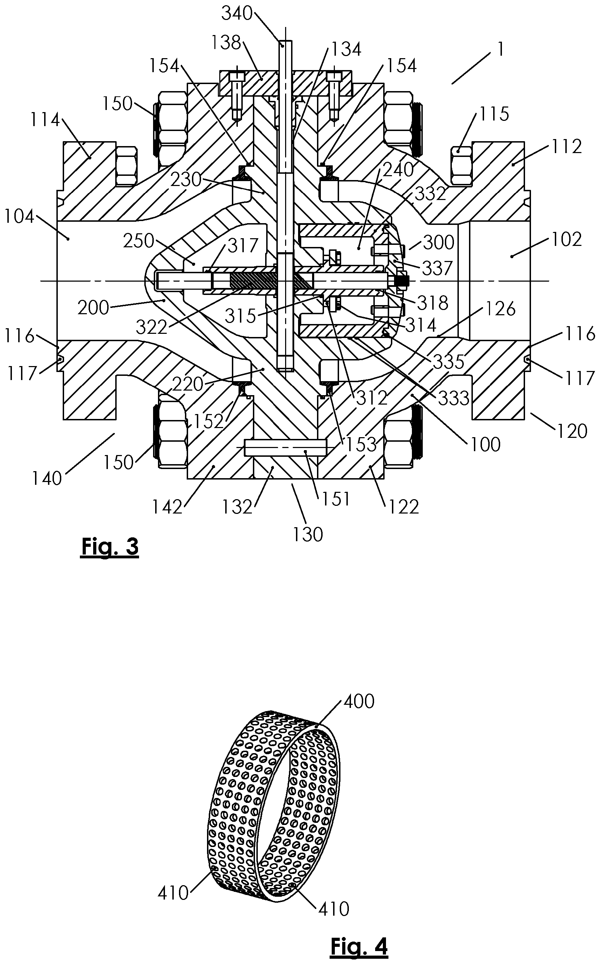

A first embodiment will now be described with reference to Figures 1-3. The actuatable valve 1 may be in the form of an on/off valve as illustrated. Alternatively and particularly with the addition of a throttle cage 400 such as that described in GB 2,054,103 hereby incorporated in its entirety by reference and as described below in further detail with reference to Figure 4, may be in the form of a flow control valve in which the flow rate fluid through the valve (or the pressure drop across the valve) may be varied substantially continuously. Achieving this is in theory possible without a throttle cage 400, but the throttle cage 400 enables a choice of flow variation with the piston position and/or pressure drop with axial movement of the restrictor 300.

The valve comprises an outer housing 100, an inner housing 200 and a restrictor 300.

The outer housing 100 comprises an upstream flange 114 and a downstream flange 112. The upstream and downstream flanges 114, 112 have through holes 113 in them for bolts 115 (for example four or more circumferentially spaced around the flange 114, 112) to pass therethrough. The bolts 115 pass through through holes in a flange of pipework to which the valve 1 is to be connected. Mating surfaces 116 at the axial ends of the valve 1 mate with a corresponding mating surface of the pipework to which the valve 1 is to be connected. The mating surfaces 116 may include a groove 117 for the provision therein of a seal (not illustrated). The mating surfaces 116 may include a groove 117 for the provision to be welded to the abutting mating pipe work, "weld prep end" (not illustrated).

The housing 100 defines an inlet opening 104 and an outlet opening 102 for fluid flow into and out of the valve (though the flow direction may be reversed (the valve 1 is a two-way valve)).

The outer housing 100 is made up of a upstream element 140 and a downstream element 120. The upstream and downstream elements 140, 120 of the outer housing 100 define the inlet opening 104 and outlet opening 102 respectively. Additionally, the upstream and downstream elements 140, 120 each comprise the associated flange 114, 112 for connecting the valve 1 to pipework.

The inner housing element 200 is in a separate component from the upstream element 140 and the downstream element 120 of the outer housing 100. Those three elements 120, 140, 200 are discrete in that they are not formed integrally (they are non-integral) and are formed as disunited components which can be mounted (and demounted, or attached/detached) to each other.

The fact that the inner housing 200 is separate from the upstream and downstream elements 140, 120 of the outer housing 100 allows the inner housing 200 to be machined, inspected for defects and repaired more easily. This is because access to the inner housing 200 does not have to be through the inlet or outlet opening 104, 102. Additionally, assembly of the actuatable restrictor 300 or insertion of the actuatable restrictor 300 into the inner housing 200 does not need to be performed through one or both of the inlet opening 104 and outlet opening 102. This makes assembly easier.

The outer housing 100 also has a central element 130. When the outer housing 100 is assembled, the central element 130 forms a central part of the outer housing 100 and is positioned between the upstream and downstream elements 140, 120. Each of the upstream, downstream and central elements 120, 140, 130 has a flange 122, 142, 132 with through holes which in the assembled state are aligned and bolts 150 (for example at least six circumferentially spaced bolts) hold the outer housing 100 together. A dowel 151 is in a through hole of the flange 132 of the central element 130 and in recesses in the flanges 142, 122 of the upstream and downstream elements 140, 120. The dowel 151 is used for alignment of those three elements 120, 130, 140. The bolts 150 are tightened up to form the outer housing.

Ring seals 152, 153 may be positioned between the central element 130 and upstream element 140 and between the central element 130 and downstream element 120. A backup seal 154 may also be provided. In this way the outer housing 100 defines a flow path for fluid through the valve 1 from the inlet opening 140 to the outlet opening 120. It should be noted that the valve 1 may have fluid flowing through it in either the direction and when the term inlet opening is used herein it may also be read as an outlet opening and vice versa. The normal flow direction would be from inlet 140 to outlet 120, the valve would also operate if the flow changed direction and seal in the reverse flow direction, in the reverse flow direction the flow path through the valve would be less favourable.

In the embodiment of Figures 1-3, the inner housing 200 is formed integrally with the central element 130 of the outer housing 100. The central element 130 and inner housing 200 may be formed by casting or forging or any other method. Following casting or forging, machining and/or polishing of the component may take place. The surfaces which are machined and/or polished are typically those surfaces which abut against other components of the valve 1. For example, the faces of the flange 132 which abut with the flanges 142, 122 of the upstream and downstream elements 140, 120 would be machined to ensure a flat surface and good mating.

The inner housing 200 is attached to the central element 130 via at least two webs 220, 230. There may only be one web or there may be more than two webs. The fluid flow path through the valve 1 allows fluid flow between the inner housing 200 and the inner surface of the outer housing 100 at all locations apart from the locations of the webs 220, 230 extending between the inner housing 200 and the outer housing 100. Therefore, the fluid flow path through the valve is substantially in an axial direction (A-G in Figure 3) between the inlet and outlet openings 102, 104 and has a substantially annular cross-section around the inner housing 200.

Although the embodiment of Figures 1-3 is shown with the outer housing formed of three elements 120, 130, 140 and the inner housing 200 being formed integrally with the central element 130, other arrangements are possible. For example, the outer housing 100 may be only formed of two elements (an upstream and a downstream element) with the inner housing 200 attached to only one of those upstream and downstream elements. For example, the upstream side of the inner housing 200 does not usually require much post casting or post forging machining on its upstream outer surface. Therefore, the inner housing 200 can be made integral with the upstream element 140 with or without the central element 130. The actuatable restrictor 300 can then easily be inserted into the inner housing 200 (from the downstream side) following any machining, polishing, defect detection or repairing. Those steps can relatively easily be carried out to the downstream side of the housing 200 as that side is fully accessible. Any defect inspection or repairing or machining to the upstream side of the housing 200 would need to take place through the inlet opening 104. Once the actuatable restrictor 300 has been assembled and attached into the inner housing 200, the downstream element120 (and any other intervening elements which are positioned between the upstream and downstream elements 140, 120) can be attached to the upstream element 140. Other arrangements are possible so long as the inner housing 200 is discrete from at least one of the upstream and downstream elements 140, 120. In this way the inner housing 200 can be made more accessible than in the case where the inner and outer housings 200, 100 are cast as a single integral unit as in the prior art.

In manufacture of the valve 1, the upstream element 140 and downstream element 120 may be cast and/or forged separately. Any post casting or forging machining, polishing, defect detection and repairing is then carried out. The inner housing element 200 is separately produced for example by casting or forging. In the embodiment of Figures 1-3 the inner housing element 200 is cast or forged integrally with the central element 130 of the outer housing 100. Following casting or forging of the inner housing element 200, any machining, polishing, defect detection and repairing may be performed on the inner housing element 200 (and central element 130 of the outer housing 100). Because the inner housing element 200 is separate from the upstream and downstream elements 140, 120 of the outer housing 100, access to the inner housing element 200, particularly the upstream and downstream ends of the housing element 200 is easy. The actuatable restrictor 300 may then be inserted into the inner housing 200 and fixedly attached thereto. Again, this step is easy because access to the upstream side of the inner housing element 200 is unrestricted. The final stage is clamping together the outer housing elements 120, 130, 140 and thereby inserting the inner housing element 200 into the outer housing 100. This final action is performed by passing the through bolts 150 through the flanges 122, 132, 142 (after they have been aligned with dowel 151) and tightening. The ring seals 152, 153 and backup seals 154 are placed between the elements 120, 130, 140 of the outer housing 100 before the bolts 150 are inserted.

The restrictor 300 will now be described. The restrictor 300 comprises two main moveable components, namely a piston 330 and a piston rod 320. The piston 330 is moveable from a position where it does not engage (e.g. touch) with the outer housing 100 to a position where it does engage with the outer housing (as illustrated in Figure 2). The piston 330 engages with a portion 126 of the inner surface of the outer housing 100. The inner surface of the outer housing 100 defines the fluid flow path. By engaging with a portion 126 of that surface, the piston 330 blocks off the fluid flow path and thereby closes the valve 1. The portion 126 of the inner surface of the outer housing is defined by material integral to the upstream element 140. In particular, the material is integral with the material of the flange 112 which is for connecting the upstream element 140 to pipework. This is possible because of the discrete (non-integral) nature of the inner housing 200 from at least one of the upstream and downstream elements 140, 120 of the outer housing 100. That is, components of the piston do not need to be inserted through the inlet opening 104 or outlet opening 102 during assembly, such that the inlet and outlet openings 104, 102 can be formed by surfaces of the upstream and downstream elements 140,120 In the prior art this is not possible and it is necessary to use a bush on the surface defining the inlet opening 104 for the piston to engage with so that the inlet opening defined by the outer housing casting is large enough for the piston to fit through. This can create difficulty in that the bush and the upstream element 140 of the outer housing 100 might not form a perfectly flat bearing surface 116.

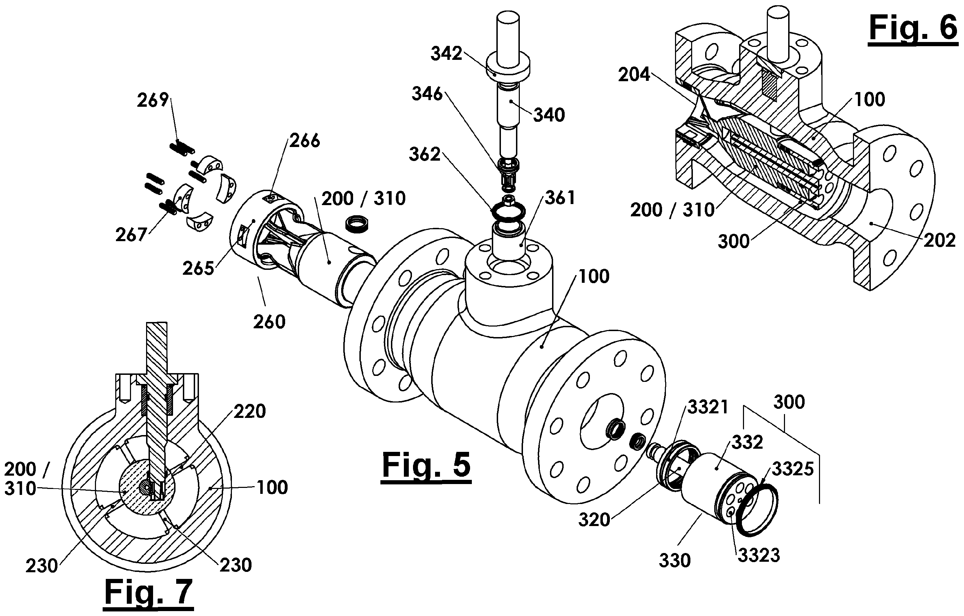

The actuatable restrictor 300 also comprises the piston rod 320. The piston rod 320 has attached at one of its ends the piston 330. The piston rod 320 is held in a piston housing 310 which is itself attached to the inner housing element 200. The piston housing 310 is illustrated as being non-integral with the inner housing 200 in the embodiment of Figures 1-3. However, this is not necessarily the case and as in the embodiment of Figures 5-9, the piston housing 310 may be formed integrally with the inner housing element 200.

The actuatable restrictor 300 may be mechanically actuated in any way, for example the piston rod 320 can be moved in the axial direction of the valve 1 (i.e. translated) using an actuator rod 340. The actuator rod 340 has a toothed surface (not visible in the diagrams) which interacts with a toothed surface 322 of the piston rod. When the actuator rod 340 is moved up and down (as illustrated) interaction of the toothed surface of the actuator rod 340 with the toothed surface 322 of the piston rod 320 is effective to translate the piston rod 320 and thereby the piston 330 in the axial direction to actuate the valve 1.

In order for the actuatable restrictor 300 to operate with high fluid pressures and with low actuation forces, both axial end faces of the piston rod 320 and piston 330 (i.e. the main moveable components) must be in fluid communication with fluid on the same side of the valve 1 in all positions of the piston 330 (the upstream side in the embodiments, but equally possible to be the downstream side). In order to achieve this, at least one through-hole is provided in the front downstream axial face of the piston 330 so that liquid passes through the front face of the piston 330. At least one passage (not illustrated) in the inner housing 200 provides communication between an upstream cavity 250 (in which the piston 330 sits in the fully retracted state) and a downstream cavity 240 on the downstream side of the inner housing 200 and in which the upstream axial end of the piston rod 320 is positioned. The upstream internal cavity 250 and downstream internal cavity 240 may be formed in any way including during casting/forging and/or by post casting/forging machining. The at least one passageway can additionally or alternatively be through the piston rod 320, as illustrated in Figure 6.

The piston 330 comprises a piston skirt 332. The piston skirt 332 is tubular and seals against the inner surface of the downstream cavity 240 of the inner housing 200. Seals 333 seal between the upstream cavity 250 and the piston skirt 332. An downstream seal 335 of the piston 330 is a dynamic seal formed between a leading annular end of the piston skirt 332 and a piston cap 337. The piston cap 337 and piston skirt 332 are held together by bolts, for example. The piston cap 335 has through holes in it such that liquid may flow through it. When the dynamic seal 335 abuts against a portion 126 of the downstream element 120 a seal is formed. In this position fluid cannot pass between the inner surface of the downstream element 120 or between the inner housing and the piston skirt 332 (because of seal 333) and cannot pass otherwise through the inner housing 200 (though it may extend through to the upstream cavity 250). Therefore, fluid flow through the valve 1 is blocked.

The piston housing 310 has a flange 312 with through holes in it. Bolts 314 are used to attach the piston housing 312, via the flange 312, to a portion of the inner housing 200. Seal 315 optionally seals between the piston housing 310 and the inner housing 200. The piston housing 310 comprises, on an inner surface, axially spaced grooves which hold a seal 317, 318 for sealing against the piston rod 320. The outer surface of the piston rod 320 is thereby sealed against the inner surface of the piston housing 310. This prevents fluid from entering between the piston rod 320 and the piston housing 310 and thereby escaping the valve 1 through a hole 134 formed in the central element 130 and in which the actuator rod 340 is positioned. The advantage of placing the groove and seal 317, 318 in the inner surface of the piston housing 310 rather than on the external surface of the piston rod 320 is that this results in better performance of the seal in terms of improved life and improved seal integrity. In an embodiment the piston rod 320 may be coated with a laser applied hard facing treatment applied before being diamond ground on the surfaces which come into contact with the seals 317, 318, during use. This further increases the seal 317, 318 life and integrity of the seal 317, 318.

Further seals and an actuator rack retaining plate 138 may be provided for ensuring fluid tight integrity and for the actuator rod 340 to bear against.

In order to actuate the restrictor 300, the actuator rod 340 is pushed into the valve 1 or pulled out of the valve 1. This results in the axial movement of the piston rod 320 as described above. As the piston 330 approaches the portion 126 of the downstream element 120 against which the downstream seal 335 of the piston 330 bears, the restriction to fluid flow through the valve increases. When the downstream seal 335 of the piston 330 seals against the portion 126 of the downstream element 120, the valve is closed. Even in the closed position, because of the through holes in the piston cap 335, fluid from the downstream side passes through the piston skirt 332 and into the restrictor internal cavity 240 formed in the inner housing 200. In this way the fluid pressure on the upstream and downstream sides of all components of the piston 330 is the same. Because the upstream cavity 250 is in fluid communication with the downstream cavity 240, the pressures on either side of the piston rod 320 are also equal. As a result, any actuation force required to move the piston rod 320 and piston 330 is relatively low even at very high inlet fluid pressures.

Figure 4 illustrates a throttle cage 400. The throttle cage 400 may be positioned within the valve 1 such that the piston 330 moves axially inside the throttle cage 400. The throttle cage 400 is held in the flow path upstream of the outlet opening 102 and downstream of the inner housing 200. The throttle cage 400 is in the form of a tube. A plurality of axially spaced through holes 410 are present in walls of the tube 400. The fluid flow path is through the through holes 410 in the throttle cage 400. As the piston translates axially in the tube 400 more or fewer of the through holes 410 are covered by the piston skirt 332. As the number of through holes 410 covered by the piston skirt 332 varies, so does the cross-sectional area of the flow path through the throttle cage 400 and therefore the pressure or flow rate drop of fluid through the valve 1. In this way the valve 1 can change the flow rate on a substantially continuous (or even linear) basis and is not just an on/off valve. Such a valve is termed a control valve. The valve is an axial flow control valve.

A second embodiment will now be described. The second embodiment is the same as the first embodiment except as described below. Features of one embodiment may be used in the other embodiment and vice versa.

In the embodiment of Figures 5-9, the outer housing 100 is made of a single piece. For example, the outer housing 100 may be an integrally cast element comprising the upstream element, downstream element and central element of the embodiment of Figures 1-3. In the embodiment of Figures 5-9 the outer housing may be comprised of more than one element, for example of an upstream element, a downstream element and a central element as illustrated in Figures 1-3. In the embodiment of Figures 5-9, the inner housing 200 is discrete from the upstream and downstream elements of the outer housing like in the first embodiment and is additionally discrete from the central element of the first embodiment. That is, the inner housing element 200 is separate from or non-integral with the outer housing 100.

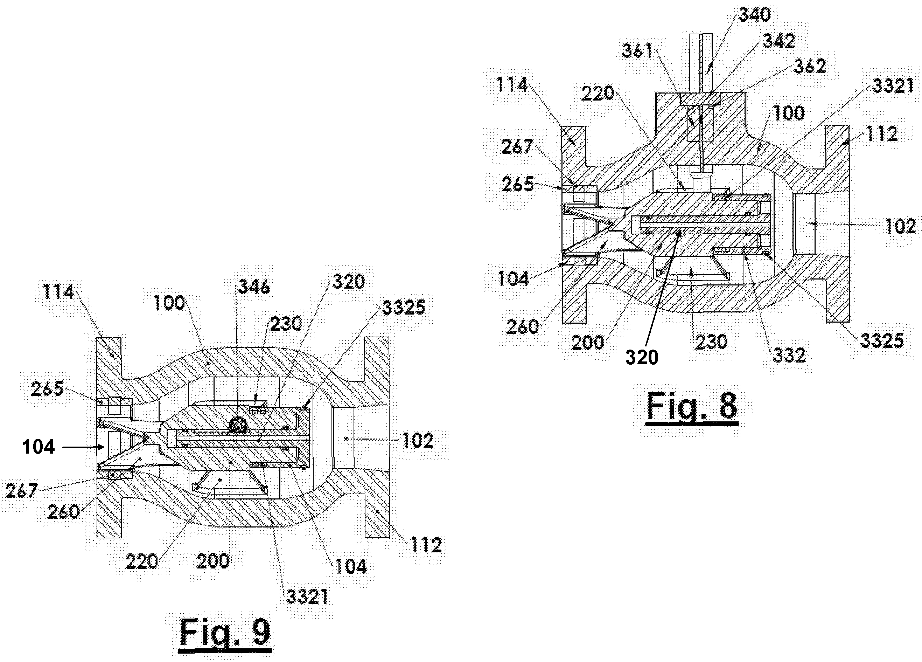

The inner housing 200 is attachable or mountable within the outer housing 100. Webs may extend from the inner housing 200 to the opposing inner surface of the outer housing 100 or vice versa. Those webs may contact the opposing surface and optionally may be secured to the opposing surface for example using bolts. In the embodiment of Figure 5, as most clearly illustrated in Figure 6, webs only exist at a upstream end of the inner housing 200. In Figures 8 and 9 such webs 220, 230 are illustrated at a central portion of the inner housing 200, as well as at the upstream end.

In the embodiment of Figures 5-9 a connector member 260 is formed at the upstream end of the inner housing 200. Fastening means are used to fix the connector member 260 to the outer housing 100 thereby fix the inner housing 200 in the outer housing 100. The connector member 260 is provided for preventing movement in the axial direction of the inner housing 200 relative to the outer housing 100 and for holding the inner housing 200 in the correct radial position. The connector member 260 is comprised of a plurality of webs extending radially and axially from the inner housing 200 to an outer ring 265. The outer ring 265 is sized to fit in the inlet opening 104 of the outer housing 200. A plurality of locking keys 267 sit in through holes 266 in the outer ring 265 and in grooves formed in the inner surface of the inlet opening 104 of the outer housing 100 (not illustrated). Locking bolts 269 maintain the locking keys 267 in place.

The inner housing 200 houses the actuatable restrictor 300 like in the first embodiment. The actuatable restrictor 300 comprises a piston 330 and piston rod 320 like in the first embodiment. In the embodiment illustrated in Figures 5-9, the piston housing is formed as part of (i.e. integral with) the inner housing 200. That is, the piston rod 320 is housed in a cavity within the inner housing 200 and there is no separate piston housing. The actuatable restrictor 300 can be seen as not having a piston housing.

The valve 1 of the second embodiment is manufactured as follows. The outer housing 100 is formed, for example by casting. The outer housing 100 may be formed integrally or may be formed by several elements joined together, for example by bolting. In that case the elements may be forged instead of cast. The inner housing 200 is formed separately to the outer housing 100. The inner housing 200 may be cast or forged. In a preferred embodiment the connector member 260 is formed integrally with the inner housing 200. However, this is not necessarily the case and the connector member 260 may be formed separately from the inner housing before being connected, for example with screw fastenings, to the inner housing 200. The connector member 260 may be formed as a single unit for example by casting or forging or may be assembled from individual separate components.

The inner housing 200 may be machined, polished, defect inspected and/or repaired prior to the actuatable restrictor 300 being installed in/on the inner housing 200. After installation of the actuatable restrictor 300, the actuatable restrictor 300 and inner housing 200 can be inserted through the inlet opening 104 of the outer housing 100 into the outer housing 100. The inner housing 200 may then be connected to the outer housing 100 using the connector member 260 as described above.

Therefore, in the second embodiment, the connection between the inner housing 200 and the outer housing 100 is inside the inner housing 100. In contrast, in the first embodiment the connection between the non-integral elements of the valve is outside of the inner housing 200 (namely via the flanges 122, 132, 142). However, both embodiments offer the advantage that prior to assembly of the valve 1 the inner housing 200 is accessible for machining, polishing, defect detection, repair and installation of the actuatable restrictor 300.

The actuatable restrictor 300 of the second embodiment differs to that of the first embodiment in that the piston skirt 332 sits outside of the inner housing 200 and surrounds the inner housing 200. A downstream seal 3321 seals between the piston skirt 332 and the inner housing 200. Grooves are formed on the inner surface of the piston skirt 332 for location of the downstream seals 3321. In this way fluid from the downstream side of the valve 1 which passes through the through holes 3323 in an axial end surface of the piston 330, is prevented from passing between the inner housing 200 and the piston skirt 332. A passageway (not illustrated) may be provided through the inner housing 200 to a upstream end of the piston rod 320 to provide for pressure balancing of the piston rod 320 and/or, as illustrated, a passageway from one axial end of the piston rod 320 to the other may be provided through the piston rod 320 itself. The outer surface of the inner housing 200 against which the seals 3321 bear may be coated in a laser coated Tungsten carbide metal matrix prior to being diamond ground to ensure a good sealing surface.

An downstream seal 3325 to seal against the portion 126 of the inner surface of the outer housing 100 is provided like in the first embodiment.

In the second embodiment the piston 330 and piston rod 320 are illustrated as being an integral unit, though this is not necessarily the case. The piston 330 and piston rod 320 (and piston housing 310) may be the same as in the first embodiment.

In the embodiment of Figures 5-9, the actuating rod 340 is not translatable but is rotatable. An actuator rack housing 361 is provided in a recess in the outer housing 200. A retaining plate seal 362 and a flange 342 on the actuator rod completes the assembly. A pinion rack 346 held onto the actuator rod engages with a rack (illustrated in Figure 9) on a side of the piston rod 320. A similar mechanism could optionally be used in the first embodiment or the mechanism of the first embodiment could be used in the second embodiment.

The valve is therefore a pressure balanced valve which stops or limits (or alters) the flow of fluid by means of a pressure balanced sealing piston. The valve is internally pressure balanced as described above in the sense that there is no fluid pathway external of the outer housing 100. The pressure balancing is obtained by the outlet fluid pressure (or inlet fluid pressure) operating on two opposite equal areas of the moving components of the restrictor. Such pressure balancing reduces the operating forces even at high inlet pressures.

In the specification where reference is made to one element being integral with another, this can be interpreted as one element being integrally formed with another element.

The separate components of the valves described above are described as being fixed together using screw fastening means such as bolts 150 and 269. This need not be the case however and the components may be (at least partly) held together by welds. The welds may be made by TIG or laser welding or other sorts of welding, for example. In the first embodiment, the flanges 122, 132, 142 may be welded together. In the second embodiment, the outer ring 265 may be welded to the inside of the inlet opening 104 of the outer housing 200.

## Claims

1. An actuatable valve (1), comprising:
an outer housing (100);
an upstream element (114) of the outer housing (100) defining an inlet opening (104);
a downstream element (112) of the outer housing (100) defining an outlet opening (102);
and an inner housing element (200) inside the outer housing (100) for housing an actuatable restrictor (300) for restricting fluid flow along a fluid flow path through the valve (1);
wherein the inner housing element (200) is non-integral with at least one of the upstream and downstream elements (114, 112), and **characterised in that** leading and trailing surfaces of moving components of the actuatable restrictor (300) which are of equal area are in fluid communication with fluid on the same side of the actuatable valve in all positions such that pressures on either side of the moving components are equal such that the actuatable valve is a pressure balanced valve.

2. The actuatable valve of claim 1, wherein the inner housing element (200) is non-integral with the upstream and downstream elements (114, 112).

3. The actuatable valve of claim 1 or 2, further comprising a central element (130) of the outer housing (100) between the upstream and downstream elements (114, 112), preferably wherein the inner housing element (200) is mounted to the central element (130) of the outer housing (100), more preferably wherein the inner housing element (200) is integral to the central element (130) of the outer housing (100).

4. The actuatable valve of claim 3, wherein the central element (130) of the outer housing (100) is integral with at least one or both of the upstream and downstream elements (114, 112) of the outer housing (100).

5. The actuatable valve of any of the preceding claims, wherein at least two of the elements of the outer housing (100) have flanges (122, 142) which are through bolted thereby to join the elements together and form the outer housing (100), and/or wherein the inner housing (200) is non-integral with the elements of the outer housing (100), preferably further comprising a connector member (260) formed at an upstream end of the inner housing (200), and fastening means fixing the connector member to the outer housing (100), more preferably wherein the connector member (260) is comprised of a plurality of webs extending radially and axially from the inner housing (200) to an outer ring (265), and more preferably wherein the outer ring (265) is fitted in the inlet opening (104).

6. The actuatable valve of any of the preceding claims, wherein at least one web (220, 230) extends between the inner housing element (200) and outer housing (100) and the inner housing element (200) is fixed to the outer housing (100) via the at least one web (220, 230), and/or
wherein the fluid flow path is substantially in an axial direction between the inlet and outlet openings (104, 102) and has a substantially annular cross-section around the inner housing (100), and/or
wherein the actuatable restrictor (300) comprises a piston (330) engagable with a portion of an inner surface of the outer housing (100) defining the fluid flow path thereby to block the fluid flow path, preferably wherein the portion of the inner surface of the outer housing is defined by material integral to a flange of the upstream element for connecting the valve to pipework and/or further comprising a throttle cage (400) in the form of a tube with a plurality of axially spaced through holes (410) through walls of the tube, the piston (330) being translatable axially in the tube thereby to vary the number of the plurality of through holes (410) through which fluid can flow and thereby to vary the restriction to fluid flow along the fluid flow path.

7. The actuatable valve of any of the preceding claims, wherein the actuatable restrictor (300) comprises a piston rod (320) at least partly housed in a piston housing (310), preferably wherein the piston housing (310) comprises a seal (315, 318) in a groove for sealing against the piston rod, more preferably wherein the piston housing (310) is integral with the inner housing (200).

8. The actuatable valve of any of the preceding claims, wherein the actuatable restrictor comprises a piston (330) engagable with a portion of an inner surface of the outer housing defining the fluid flow path thereby to block the fluid flow path and at least one through-hole (3323) is provided in a front downstream axial face of the piston so that liquid passes through the front face of the piston, preferably wherein the actuatable restrictor (300) comprises a piston rod (320) at least partly housed in a piston housing (310) and at least one passage is provided in the inner housing (200) providing communication between an upstream cavity (250) in which the piston sits in a fully retracted state and a downstream cavity (330) on the downstream side of the inner housing (240) in which an upstream axial end of the piston rod (320) is positioned, or wherein the actuatable restrictor comprises a piston rod (320) at least partly housed in a piston housing (310) and a passageway through the piston rod (320) between an upstream cavity (250) in which the piston sits in a fully retracted state and a downstream cavity (240) on the downstream side of the inner housing in which an upstream axial end of the piston rod is positioned.

9. The actuatable valve of any of the preceding claims, wherein the valve is an internally pressure balanced valve and/or wherein the valve is a mechanically actuated valve and/or wherein at least some of the elements are at least partly fixed together by welds and/or wherein the valve is an axial valve.

10. The actuatable valve of any of claims 1-9, wherein the restrictor (300) is actuatable by an actuation rod (340) from outside of the valve, preferably wherein the actuatable restrictor (300) comprises a piston rod (320) at least partly housed in a piston housing (310) and the piston rod (320) can be moved in the axial direction of the valve using the actuator rod (340), and optionally wherein the actuator rod (340) has a toothed surface which interacts with a toothed surface (322) of the piston rod (320).

11. The actuatable valve of claim 10, wherein the actuating rod (340) is rotatable, preferably further comprising an actuator rack housing in a recess of the outer housing and/or further comprising a pinion rack held onto the actuator rod which engages with a rack on a side of the piston rod.

12. A method of manufacturing an actuatable pressure balanced valve (1), the method comprising the steps of:
providing an outer housing (100) comprising at least an upstream element (114) defining an inlet opening (104) and a downstream element (112) defining an outlet opening (102);
providing an inner housing element (200) which is separate from the upstream element (114) and/or downstream element (112);
installing an actuatable restrictor (300) for restricting fluid flow along a fluid flow path through the valve onto the inner housing (200), wherein leading and trailing surfaces of moving components of the actuatable restrictor (300) which are of equal area are in fluid communication with fluid on the same side of the actuatable valve in all positions such that pressures on either side of the moving components are equal; and
installing the inner housing element (200) with the installed actuatable restrictor into the outer housing (100).

13. The method of claim 12, wherein the inner housing element (200) is mounted to a central element (130) of the outer housing (100), and/or either:
(i) wherein installing the inner housing (200) in the outer housing (100) comprises bolting together the elements of the outer housing (100), or (ii) wherein installing the inner housing (200) in the outer housing (100) comprises inserting the inner housing (200) and actuatable restrictor (300) through one of the inlet opening (104) and outlet opening (102) and using fastening means to fix the inner housing (200) in the outer housing (100).

14. The method of claim 12 or 13, wherein providing an outer housing (100) comprises casting or forging the upstream element (114) and casting or forging the downstream element (112) and providing the inner housing element (200) comprises casting or forging the inner housing element (200) in a separate step to casting or forging the upstream or downstream elements (114, 112), and/or further comprising fixing together at least some of the elements at least partly by welding.

## Patentansprüche

1. Betätigbares Ventil (1), umfassend:
ein äußeres Gehäuse (100);
ein stromaufwärtiges Element (114) des äußeren Gehäuses (100), das eine Einlassöffnung (104) definiert;
ein stromabwärtiges Element (112) des äußeren Gehäuses (100), das eine Auslassöffnung (102) definiert;
und ein inneres Gehäuseelement (200) innerhalb des äußeren Gehäuses (100) zum Aufnehmen einer betätigbaren Drossel (300) zum Drosseln der Fluidströmung entlang eines Fluidströmungswegs durch das Ventil (1);
wobei das innere Gehäuseelement (200) nicht einstückig mit mindestens einem der stromaufwärtigen und stromabwärtigen Elemente (114, 112) ist, und **dadurch gekennzeichnet ist, dass** die vorderen und hinteren Flächen von sich bewegenden Komponenten der betätigbaren Drossel (300), die flächengleich sind, in Fluidkommunikation mit Fluid auf derselben Seite des betätigbaren Ventils in allen Positionen stehen, so dass die Drücke auf jeder Seite der sich bewegenden Komponenten gleich sind, so dass das betätigbare Ventil ein druckausgeglichenes Ventil ist.

2. Betätigbares Ventil nach Anspruch 1, wobei das innere Gehäuseelement (200) nicht einstückig mit den stromaufwärtigen und stromabwärtigen Elementen (114, 112) ist.

3. Betätigbares Ventil nach Anspruch 1 oder 2, ferner umfassend ein zentrales Element (130) des äußeren Gehäuses (100) zwischen den stromaufwärtigen und stromabwärtigen Elementen (114, 112), bevorzugt wobei das innere Gehäuseelement (200) am zentralen Element (130) des äußeren Gehäuses (100) angebracht ist, besonders bevorzugt wobei das innere Gehäuseelement (200) einstückig mit dem zentralen Element (130) des äußeren Gehäuses (100) gebildet ist.

4. Betätigbares Ventil nach Anspruch 3, wobei das zentrale Element (130) des äußeren Gehäuses (100) einstückig mit mindestens einem oder beiden der stromaufwärtigen und/oder stromabwärtigen Elemente (114, 112) des äußeren Gehäuses (100) ist.

5. Betätigbares Ventil nach einem der vorhergehenden Ansprüche, wobei mindestens zwei der Elemente des äußeren Gehäuses (100) Flansche (122, 142) aufweisen, die zusammengeschraubt sind, um dadurch die Elemente miteinander zu verbinden und das äußere Gehäuse (100) zu bilden, und/oder wobei das innere Gehäuse (200) nicht einstückig mit den Elementen des äußeren Gehäuses (100) ist, bevorzugt ferner ein Verbinderelement (260) umfassend, das an einem stromaufwärtigen Ende des inneren Gehäuses (200) gebildet ist, und Befestigungsmittel zum Befestigen des Verbinderelements mit dem äußeren Gehäuse (100), besonders bevorzugt wobei das Verbinderelement (260) eine Vielzahl von Stegen umfasst, die sich radial und axial von dem inneren Gehäuse (200) zu einem äußeren Ring (265) erstrecken, und besonders bevorzugt wobei der äußere Ring (265) in die Einlassöffnung (104) eingepasst ist.

6. Betätigbares Ventil nach einem der vorhergehenden Ansprüche, wobei sich mindestens ein Steg (220, 230) zwischen dem inneren Gehäuseelement (200) und dem äußeren Gehäuse (100) erstreckt und das innere Gehäuseelement (200) an dem äußeren Gehäuse (100) über den mindestens einen Steg (220, 230) befestigt ist, und/oder
wobei der Fluidströmungsweg im Wesentlichen in einer axialen Richtung zwischen den Einlass- und Auslassöffnungen (104, 102) liegt und einen im Wesentlichen ringförmigen Querschnitt um das innere Gehäuse (100) aufweist, und/oder
wobei die betätigbare Drossel (300) einen Kolben (330) umfasst, der mit einem Abschnitt einer Innenfläche des äußeren Gehäuses (100) in Eingriff bringbar ist, der den Fluidströmungsweg definiert, um dadurch den Fluidströmungsweg zu blockieren, bevorzugt wobei der Abschnitt der Innenfläche des äußeren Gehäuses durch ein Material definiert ist, das einstückig mit einem Flansch des stromaufwärtigen Elements zum Verbinden des Ventils mit einer Rohrleitung ist und/oder ferner einen Drosselkäfig (400) in Form eines Rohrs mit einer Vielzahl von axial beabstandeten Durchgangslöchern (410) Wände des Rohrs umfasst, wobei der Kolben (330) axial in dem Rohr übersetzbar ist, um dadurch die Anzahl der Vielzahl von Durchgangslöchern (410) zu variieren, durch die Fluid fließen kann, und um dadurch die Drosselung der Fluidströmung entlang des Fluidströmungswegs zu variieren.

7. Betätigbares Ventil nach einem der vorhergehenden Ansprüche, wobei die betätigbare Drossel (300) eine Kolbenstange (320) umfasst, die mindestens teilweise in einem Kolbengehäuse (310) untergebracht ist, bevorzugt wobei das Kolbengehäuse (310) eine Dichtung (315, 318) in einer Nut zur Abdichtung gegen die Kolbenstange umfasst, besonders bevorzugt wobei das Kolbengehäuse (310) einstückig mit dem inneren Gehäuse (200) ist.

8. Betätigbares Ventil nach einem der vorhergehenden Ansprüche, wobei die betätigbare Drossel einen Kolben (330) umfasst, der mit einem Abschnitt einer Innenfläche des äußeren Gehäuses in Eingriff bringbar ist, der den Fluidströmungsweg definiert, um dadurch den Fluidströmungsweg zu blockieren und mindestens ein Durchgangsloch (3323) in einer vorderen stromabwärtigen axialen Fläche des Kolbens bereitgestellt ist, so dass Flüssigkeit durch die Vorderfläche des Kolbens strömt, bevorzugt wobei die betätigbare Drossel (300) eine Kolbenstange (320) umfasst, die mindestens teilweise in einem Kolbengehäuse (310) untergebracht ist und mindestens ein Durchgang in dem inneren Gehäuse (200) bereitgestellt ist, der Kommunikation zwischen einem stromaufwärtigen Hohlraum (250), in dem der Kolben in einem vollständig eingefahrenen Zustand sitzt, und einem stromabwärtigen Hohlraum (330) auf der stromabwärtigen Seite des inneren Gehäuses (240), in dem ein stromaufwärtiges axiales Ende der Kolbenstange (320) positioniert ist, oder wobei die betätigbare Drossel eine Kolbenstange (320) umfasst, die mindestens teilweise in einem Kolbengehäuse (310) und einem Durchgang durch die Kolbenstange (320) zwischen einem stromaufwärtigen Hohlraum (250) untergebracht ist, in dem der Kolben in einem vollständig eingefahrenen Zustand sitzt, und einem stromabwärtigen Hohlraum (240) auf der stromabwärtigen Seite des inneren Gehäuses, in dem ein stromaufwärtiges axiales Ende der Kolbenstange positioniert ist.

9. Betätigbares Ventil nach einem der vorhergehenden Ansprüche, wobei das Ventil ein intern druckausgeglichenes Ventil ist und/oder wobei das Ventil ein mechanisch betätigtes Ventil ist und/oder wobei mindestens einige der Elemente mindestens teilweise durch Schweißnähte miteinander befestigt sind und/oder wobei das Ventil ein axiales Ventil ist.

10. Betätigbares Ventil nach einem der Ansprüche 1 bis 9, wobei die Drossel (300) durch eine Betätigungsstange (340) von außerhalb des Ventils betätigbar ist, bevorzugt wobei die betätigbare Drossel (300) eine Kolbenstange (320) umfasst, die mindestens teilweise in einem Kolbengehäuse (310) untergebracht ist und die Kolbenstange (320) in der axialen Richtung des unter Verwendung der Betätigungsstange (340) bewegbar ist, und wahlweise wobei die Betätigungsstange (340) eine gezahnte Fläche aufweist, die mit einer gezahnten Fläche (322) der Kolbenstange (320) zusammenwirkt.

11. Betätigbares Ventil nach Anspruch 10, wobei die Betätigungsstange (340) drehbar ist, bevorzugt ferner ein Betätigerzahnstangengehäuse in einer Aussparung des äußeren Gehäuses umfasst und/oder ferner eine an der Betätigungsstange gehaltene Ritzelzahnstange umfasst, die mit einer Zahnstange auf einer Seite der Kolbenstange in Eingriff steht.

12. Verfahren zur Herstellung eines betätigbaren druckausgeglichenen Ventils (1), wobei das Verfahren die folgenden Schritte umfasst:
Bereitstellen eines äußeren Gehäuses (100) mit mindestens einem stromaufwärtigen Element (114), das eine Einlassöffnung (104) definiert, und einem stromabwärtigen Element (112), das eine Auslassöffnung (102) definiert;
Bereitstellen eines inneren Gehäuseelements (200), das vom stromaufwärtigen Element (114) und/oder stromabwärtigen Element (112) getrennt ist;
Installieren einer betätigbaren Drossel (300) zum Drosseln von Fluidströmung entlang eines Flüssigkeitsströmungswegs durch das Ventil auf das innere Gehäuse (200), wobei vordere und hintere Flächen von sich bewegenden Komponenten der betätigbaren Drossel (300), die gleich groß sind, sich in Fluidkommunikation mit dem Fluid auf derselben Seite des betätigbaren Ventils in allen Positionen befinden, so dass Drücke auf beiden Seiten der sich bewegenden Komponenten gleich sind; und
Installieren des inneren Gehäuseelements (200) mit der installierten betätigbaren Drossel in das äußere Gehäuse (100).

13. Verfahren nach Anspruch 12, wobei das innere Gehäuseelement (200) an einem zentralen Element (130) des äußeren Gehäuses (100) angebracht ist, und/oder entweder:
(i) wobei Installieren des inneren Gehäuses (200) in das äußere Gehäuse (100) Zusammenschrauben der Elemente des äußeren Gehäuses (100) umfasst, oder (ii) wobei Installieren des inneren Gehäuses (200) in das äußere Gehäuse (100) Einsetzen des inneren Gehäuses (200) und der betätigbaren Drossel (300) durch eine der Einlassöffnung (104) und Auslassöffnung (102) umfasst und Verwendung von Befestigungsmitteln zum Befestigen des inneren Gehäuses (200) im äußeren Gehäuse (100).

14. Verfahren nach Anspruch 12 oder 13, wobei Bereitstellen eines äußeren Gehäuses (100) Gießen oder Schmieden des stromaufwärtigen Elements (114) und Gießen oder Schmieden des stromabwärtigen Elements (112) umfasst und Bereitstellen des inneren Gehäuseelements (200) Gießen oder Schmieden des inneren Gehäuseelements (200) in einem getrennten Schritt zum Gießen oder Schmieden der stromaufwärtigen oder stromabwärtigen Elemente (114, 112) umfasst, und/oder ferner umfasst, mindestens einige der Elemente mindestens teilweise durch Schweißen miteinander zu befestigen.

## Revendications

1. Soupape à actionnement (1), comprenant :
un boîtier externe (100) ;
un élément amont (114) du boîtier externe (100) définissant une ouverture d'entrée (104) ;
un élément aval (112) du boîtier externe (100) définissant une ouverture de sortie (102) ;
et un élément de boîtier interne (200) à l'intérieur du boîtier externe (100) permettant de loger un restricteur à actionnement (300) permettant de restreindre un écoulement de fluide le long d'un trajet d'écoulement de fluide à travers la soupape (1) ; l'élément de boîtier interne (200) ne formant pas un seul tenant avec au moins un des éléments amont et aval (114, 112), et **caractérisée en ce que** des surfaces avant et arrière de composants mobiles du restricteur à actionnement (300) qui sont de même surface sont en communication fluidique avec le fluide du même côté que la soupape à actionnement dans toutes les positions de manière que des pressions sur chaque côté des composants mobiles sont égales de manière que la soupape à actionnement est une soupape à pression d'équilibre.

2. Soupape à actionnement selon la revendication 1, dans laquelle l'élément de boîtier interne (200) ne forme pas un seul tenant avec les éléments amont et aval (114, 112).

3. Soupape à actionnement selon la revendication 1 ou 2, comprenant en outre un élément central (130) du boîtier externe (100) entre les éléments amont et aval (114, 112), de préférence l'élément de boîtier interne (200) étant monté sur l'élément central (130) du boîtier externe (100), de manière davantage préférée l'élément de boîtier interne (200) formant un seul tenant avec l'élément central (130) du boîtier externe (100).

4. Soupape à actionnement selon la revendication 3, dans laquelle l'élément central (130) du boîtier externe (100) forme un seul tenant avec au moins un des éléments amont et aval (114, 112) du boîtier externe (100) ou les deux.

5. Soupape à actionnement selon l'une quelconque des revendications précédentes, dans laquelle au moins deux des éléments du boîtier externe (100) comportent des brides (122, 142) qui sont boulonnés avec des boulons traversants permettant ainsi d'assembler les éléments et de former le boîtier externe (100), et/ou dans laquelle le boîtier interne (200) ne forme pas un seul tenant avec les éléments du boîtier externe (100), de préférence comprenant en outre un élément de raccordement (260) formé sur une extrémité amont du boîtier interne (200), et un moyen de fixation fixant l'élément de raccordement au boîtier externe (100), de manière davantage préférée l'élément de raccordement (260) comprenant une pluralité de bandes s'étendant radialement et axialement depuis le boîtier interne (200) vers un anneau externe (265), et de manière davantage préférée l'anneau externe (265) étant installé dans l'ouverture d'entrée (104).

6. Soupape à actionnement selon l'une quelconque des revendications précédentes, dans laquelle au moins une bande (220, 230) s'étend entre l'élément de boîtier interne (200) et le boîtier externe (100) et l'élément de boîtier interne (200) est fixé au boîtier externe (100) par le biais de l'au moins une bande (220, 230), et/ou
dans laquelle le trajet d'écoulement de fluide se trouve sensiblement dans une direction axiale entre les ouvertures d'entrée et de sortie (104, 102) et comporte une section transversale sensiblement annulaire autour du boîtier interne (100), et/ou
dans laquelle le restricteur à actionnement (300) comprend un piston (330) pouvant entrer en prise avec une partie d'une surface interne du boîtier externe (100) définissant le trajet d'écoulement de fluide, permettant ainsi de bloquer le trajet d'écoulement de fluide, de préférence la partie de la surface interne du boîtier externe étant définie par un matériau formant un seul tenant avec une bride de l'élément amont permettant de raccorder la soupape à la canalisation et/ou comprenant en outre une cage d'étranglement (400) sous forme de tube avec une pluralité de trous traversants (410) espacés axialement à travers les parois du tube, le piston (330) pouvant être translaté axialement dans le tube, permettant ainsi de faire varier le nombre de la pluralité de trous traversants (410) à travers lesquels un fluide peut s'écouler et permettant ainsi de faire varier la restriction de l'écoulement de fluide le long du trajet d'écoulement de fluide.

7. Soupape à actionnement selon l'une quelconque des revendications précédentes, dans laquelle le restricteur à actionnement (300) comprend une tige de piston (320) au moins partiellement logée dans un boîtier de piston (310), de préférence dans laquelle le boîtier de piston (310) comprend un joint d'étanchéité (315, 318) dans une rainure destiné à assurer une étanchéité contre la tige de piston, de manière davantage préférée le boîtier de piston (310) formant un seul tenant avec le boîtier interne (200).

8. Soupape à actionnement selon l'une quelconque des revendications précédentes, dans laquelle le restricteur à actionnement comprend un piston (330) pouvant entrer en prise avec une partie d'une surface interne du boîtier externe définissant le trajet d'écoulement de fluide, permettant ainsi de bloquer le trajet d'écoulement de fluide et au moins un trou traversant (3323) est disposé dans une face axiale avant et aval du piston de manière qu'un liquide passe par la face avant du piston, de préférence le restricteur à actionnement (300) comprenant une tige de piston (320) au moins partiellement logée dans un boîtier de piston (310) et au moins un passage étant disposé dans le boîtier interne (200) permettant une communication entre une cavité amont (250) dans laquelle le piston est placé dans un état complètement rétracté et une cavité aval (330) sur le côté aval du boîtier interne (240) dans lequel une extrémité axiale amont de la tige de piston (320) est positionnée, ou le restricteur à actionnement comprenant une tige de piston (320) au moins partiellement logée dans un boîtier de piston (310) et un passage à travers la tige de piston (320) entre une cavité amont (250) dans laquelle le piston est placé dans un état complètement rétracté et une cavité aval (240) sur le côté aval du boîtier interne dans lequel une extrémité axiale amont de la tige de piston est positionnée.

9. Soupape à actionnement selon l'une quelconque des revendications précédentes, la soupape étant une soupape à pression d'équilibre interne et/ou la soupape étant une soupape actionnée mécaniquement et/ou au moins certains des éléments étant au moins partiellement assemblés par des soudures et/ou la soupape étant une soupape axiale.

10. Soupape à actionnement selon l'une quelconque des revendications 1 à 9, dans laquelle le restricteur (300) est actionnable par une tige d'actionnement (340) depuis l'extérieur de la soupape, de préférence le restricteur à actionnement (300) comprenant une tige de piston (320) au moins partiellement logée dans un boîtier de piston (310) et la tige de piston (320) pouvant être déplacée dans la direction axiale de la soupape à l'aide de la tige de vérin (340), et la tige de vérin (340) présentant éventuellement une surface dentée qui interagit avec une surface dentée (322) de la tige de piston (320).

11. Soupape à actionnement selon la revendication 10, dans laquelle la tige d'actionnement (340) est rotative, de préférence comprenant en outre un boîtier de crémaillère d'actionneur dans un évidement du boîtier externe et/ou comprenant en outre un engrenage à crémaillère maintenu sur la tige de vérin qui entre en prise avec une crémaillère sur un côté de la tige de piston.

12. Procédé de fabrication d'une soupape à actionnement à pression d'équilibre (1), le procédé comprenant les étapes consistant à :
fournir un boîtier externe (100) comprenant au moins un élément amont (114) définissant une ouverture d'entrée (104) et un élément aval (112) définissant une ouverture de sortie (102) ;
fournir un élément de boîtier interne (200) qui est séparé de l'élément amont (114) et/ou de l'élément aval (112) ;
installer un restricteur à actionnement (300) permettant de restreindre un écoulement de fluide le long d'un trajet d'écoulement de fluide à travers la soupape sur le boîtier interne (200), des surfaces avant et arrière de composants mobiles du restricteur à actionnement (300) qui sont de surface égale étant en communication fluidique avec le fluide sur le même côté de la soupape à actionnement dans toutes les positions de manière que des pressions sur les deux côtés des composants mobiles sont égales ; et
installer l'élément de boîtier interne (200) avec le restricteur à actionnement installé dans le boîtier externe (100).

13. Procédé selon la revendication 12, dans lequel l'élément de boîtier interne (200) est monté sur un élément central (130) du boîtier externe (100), et/ou soit :
(i) dans lequel l'installation du boîtier interne (200) dans le boîtier externe (100) comprend le boulonnage ensemble des éléments du boîtier externe (100), soit (ii) dans lequel l'installation du boîtier interne (200) dans le boîtier externe (100) comprend l'insertion du boîtier interne (200) et du restricteur à actionnement (300) par l'ouverture d'entrée (104) ou l'ouverture de sortie (102) et l'utilisation d'un moyen de fixation pour fixer le boîtier interne (200) dans le boîtier externe (100).

14. Procédé selon la revendication 12 ou 13, dans lequel la fourniture d'un boîtier externe (100) comprend le moulage ou le forgeage de l'élément amont (114) et le moulage ou le forgeage de l'élément aval (112) et la fourniture de l'élément de boîtier interne (200) comprend le moulage ou le forgeage de l'élément de boîtier interne (200) dans une étape séparée du moulage ou forgeage des éléments amont et aval (114, 112), et/ou comprenant en outre la fixation ensemble d'au moins certains des éléments au moins partiellement par soudage.
